(19) Europäisches Patentamt
European Patent Office
Office européen des brevets

(11) **EP 4 289 099 B1**

(12) **EUROPEAN PATENT SPECIFICATION**

(45) Date of publication and mention
of the grant of the patent:
**29.04.2026 Bulletin 2026/18**

(21) Application number: **22767525.3**

(22) Date of filing: **10.03.2022**

(51) International Patent Classification (IPC):
*H04L 5/14* (2006.01)     *H04L 5/00* (2006.01)
*H04L 1/00* (2006.01)     *H04W 72/04* (2023.01)

(52) Cooperative Patent Classification (CPC):
**H04L 5/0078; H04B 7/0689; H04L 1/1864;**
**H04L 1/1893; H04L 1/1896; H04L 5/0094;**
**H04W 52/0219; H04W 52/0238;** H04L 5/0007;
H04L 5/14

(86) International application number:
**PCT/KR2022/003352**

(87) International publication number:
**WO 2022/191629 (15.09.2022 Gazette 2022/37)**

(54) **METHOD AND APPARATUS FOR TRANSMITTING AND RECEIVING SIGNALS**

VERFAHREN UND VORRICHTUNG ZUM SENDEN UND EMPFANGEN VON SIGNALEN

PROCÉDÉ ET APPAREIL D'ÉMISSION ET DE RÉCEPTION DE SIGNAUX

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **11.03.2021 CN 202110268252**

(43) Date of publication of application:
**13.12.2023 Bulletin 2023/50**

(73) Proprietor: **Samsung Electronics Co., Ltd.**
**Suwon-si, Gyeonggi-do 16677 (KR)**

(72) Inventors:
• **SU, Di**
**Gyeonggi-do, 16677 (KR)**
• **LIN, Peng**
**Gyeonggi-do, 16677 (KR)**
• **QIAN, Chen**
**Gyeonggi-do, 16677 (KR)**
• **WANG, Yi**
**Gyeonggi-do, 16677 (KR)**

(74) Representative: **Gulde & Partner**
**Patent- und Rechtsanwaltskanzlei mbB**
**Berliner Freiheit 2**
**10785 Berlin (DE)**

(56) References cited:
WO-A1-2020/001517     US-A1- 2013 039 332
US-A1- 2016 112 173     US-A1- 2017 230 159
US-A1- 2020 128 523     US-B2- 9 059 749

**Description**

**[Technical Field]**

The present application relates to a technical field of wireless communication, in particular to a method and an apparatus for transmitting and receiving signals in a wireless communication system.

**[Background Art]**

Considering the development of wireless communication from generation to generation, the technologies have been developed mainly for services targeting humans, such as voice calls, multimedia services, and data services. Following the commercialization of 5G (5th-generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th-generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bps and a radio latency less than 100$\mu$sec, and thus will be 50 times as fast as 5G communication systems and have the 1/10 radio latency thereof.

In order to accomplish such a high data rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, radio frequency (RF) elements, antennas, novel waveforms having a better coverage than orthogonal frequency division multiplexing (OFDM), beamforming and massive multiple input multiple output (MIMO), full dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, high-altitude platform stations (HAPS), and the like in an integrated manner; an improved network structure for supporting mobile base stations and the like and enabling network operation optimization and automation and the like; a dynamic spectrum sharing technology via collison avoidance based on a prediction of spectrum usage; an use of artificial intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as mobile edge computing (MEC), clouds, and the like) over the network. In addition, through designing new protocols to be used in 6G communication systems, developing mecahnisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive extended reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

A wireless access system supporting a Full Duplex Radio (FDR) transmission environment and a method for efficiently transmitting and receiving a signal when FDR is applied are known from US 2017/230159 Al.

**[Disclosure of Invention]**

**[Technical Problem]**

In order to meet the increasing demand for wireless data communication services since the deployment of 4G communication systems, efforts have been made to develop improved 5G or pre-5G communication systems. Therefore, 5G or pre-5G communication systems are also called "Beyond 4G networks" or "Post-LTE systems".

In order to achieve a higher data rate, 5G communication systems are implemented in higher frequency (millimeter, mmWave) bands, e.g., 60 GHz bands. In order to reduce propagation loss of radio waves and increase a transmission distance, technologies such as beamforming, massive multiple-input multiple-output (MIMO), full-dimensional MIMO (FD-MIMO), array antenna, analog beamforming and large-scale antenna are discussed in 5G communication systems.

In addition, in 5G communication systems, developments of system network improvement are underway based on advanced small cell, cloud radio access network (RAN), ultra-dense network, device-to-device (D2D) communication, wireless backhaul, mobile network, cooperative communication, coordinated multi-points (CoMP), reception-end interference cancellation, etc.

In 5G systems, hybrid FSK and QAM modulation (FQAM) and sliding window superposition coding (SWSC) as advanced coding modulation (ACM), and filter bank multicarrier (FBMC), non-orthogonal multiple access (NOMA) and sparse code multiple access (SCMA) as advanced access technologies have been developed.

**[Solution to Problem]**

The invention is defined by the appended claims. The description that follows is subjected to this limitation. Any disclosure lying outside the scope of said claims is only intended for illustrative as well as comparative purposes.

**[Advantageous Effects of Invention]**

According to the disclosure, there is improvements in and relating to transmitting and receiving signals in a wireless communication system.

**[Brief Description of Drawings]**

The above and other aspects, features and advantages of certain embodiments of the present disclosure will become more apparent from the following description taken in conjunction with the accompanying drawings, in which:

> FIG. 1 illustrates an example wireless network according to various embodiments of the present disclosure;
> FIG. 2a illustrates example a wireless transmission path according to embodiments of the present disclosure;
> FIG. 2b illustrates example a wireless reception path according to embodiments of the present disclosure;
> FIG. 3a illustrates an example UE according to an embodiment of the present disclosure;
> FIG. 3b illustrates an example gNB according to an embodiment of the present disclosure;
> FIG. 4 illustrates carrier configuration according to an embodiment of the present disclosure;
> FIG. 5 illustrates a method performed by a terminal in a wireless communication system according to an embodiment of the present disclosure;
> FIG. 6 illustrates a method performed by a base station in a wireless communication system according to an embodiment of the present disclosure;
> FIG. 7 is a block diagram illustrating a structure of a terminal according to an embodiment of the present disclosure; and
> FIG. 8 is a block diagram illustrating a structure of a base station according to an embodiment of the present disclosure.

**[Mode for the Invention]**

Technical solutions of embodiments of the present application can be applied to various communication systems, such as a global system for mobile communications (GSM) system, a code division multiple access (CDMA) system, a wideband code division multiple access (WCDMA) system, a general packet radio service (GPRS), a long term evolution (LTE) system, a LTE frequency division duplex (FDD) system, a LTE time division duplex (TDD), a universal mobile telecommunication system (UMTS), a worldwide interoperability for microwave access (WiMAX) communication system, a 5th generation (5G) system or new radio (NR), etc. In addition, technical solutions of embodiments of the present application can be applied to future-oriented communication technologies.

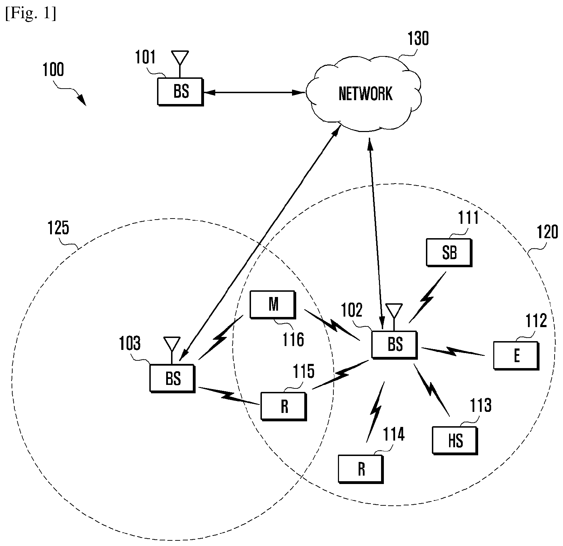

FIG. 1 illustrates an example wireless network 100 according to various embodiments of the present disclosure.

The embodiment of the wireless network 100 shown in FIG. 1 is for illustration only. Other embodiments of the wireless network 100 can be used without departing from the scope of the present disclosure.

The wireless network 100 includes a gNodeB (gNB) 101, a gNB 102, and a gNB 103. gNB 101 communicates with gNB 102 and gNB 103. gNB 101 also communicates with at least one Internet Protocol (IP) network 130, such as the Internet, a private IP network, or other data networks.

Depending on a type of the network, other well-known terms such as "base station" or "access point" can be used instead of "gNodeB" or "gNB". For convenience, the terms "gNodeB" and "gNB" are used in this patent document to refer to network infrastructure components that provide wireless access for remote terminals. And, depending on the type of the network, other well-known terms such as "mobile station", "user station", "remote terminal", "wireless terminal" or "user apparatus" can be used instead of "user equipment" or "UE". For convenience, the terms "user equipment" and "UE" are used in this patent document to refer to remote wireless devices that wirelessly access the gNB, no matter whether the UE is a mobile device (such as a mobile phone or a smart phone) or a fixed device (such as a desktop computer or a vending machine).

gNB 102 provides wireless broadband access to the network 130 for a first plurality of User Equipments (UEs) within a coverage area 120 of gNB 102. The first plurality of UEs include a UE 111, which may be located in a Small Business (SB); a UE 112, which may be located in an enterprise (E); a UE 113, which may be located in a WiFi Hotspot (HS); a UE 114, which may be located in a first residence (R); a UE 115, which may be located in a second residence (R); a UE 116, which may be a mobile device (M), such as a cellular phone, a wireless laptop computer, a wireless PDA, etc. GNB 103 provides wireless broadband access to network 130 for a second plurality of UEs within a coverage area 125 of gNB 103. The second plurality of UEs include a UE 115 and a UE 116. In some embodiments, one or more of gNBs 101-103 can communicate with each other and with UEs 111-116 using 5G, Long Term Evolution (LTE), LTE-A, WiMAX or other advanced wireless communication technologies.

The dashed lines show approximate ranges of the coverage areas 120 and 125, and the ranges are shown as approximate circles merely for illustration and explanation purposes. It should be clearly understood that the coverage areas associated with the gNBs, such as the coverage areas 120 and 125, may have other shapes, including irregular shapes, depending on configurations of the gNBs and changes in the radio environment associated with natural obstacles and man-made obstacles.

As will be described in more detail below, one or more of gNB 101, gNB 102, and gNB 103 include a 2D antenna array as described in embodiments of the present disclosure. In some embodiments, one or more of gNB 101, gNB 102, and gNB 103 support codebook designs and structures for systems with 2D antenna arrays.

Although FIG. 1 illustrates an example of the wireless network 100, various changes can be made to FIG. 1. The wireless network 100 can include any number of gNBs and any number of UEs in any suitable arrangement, for example. Furthermore, gNB 101 can directly communicate with any number of UEs and provide wireless broadband access to the network 130 for those UEs. Similarly, each gNB 102-103 can directly communicate with the network 130 and provide direct wireless broadband access to the network 130 for the UEs. In addition, gNB 101, 102 and/or 103 can provide access to other or additional external networks, such as external telephone networks or other types of data networks.

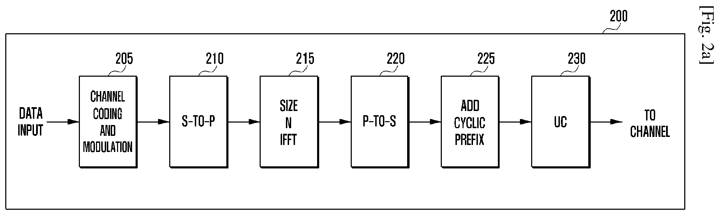

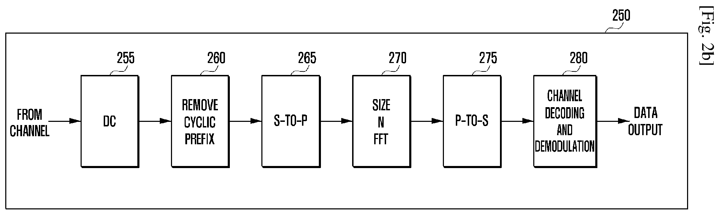

FIGs. 2a and 2b illustrate example wireless transmission and reception paths according to the present disclosure. In the following description, the transmission path 200 can be described as being implemented in a gNB, such as gNB 102, and the reception path 250 can be described as being implemented in a UE, such as UE 116. However, it should be understood that the reception path 250 can be implemented in a gNB and the transmission path 200 can be implemented in a UE. In some embodiments, the reception path 250 is configured to support codebook designs and structures for systems with 2D antenna arrays as described in embodiments of the present disclosure.

The transmission path 200 includes a channel coding and modulation block 205, a Serial-to-Parallel (S-to-P) block 210, a size N Inverse Fast Fourier Transform (IFFT) block 215, a Parallel-to-Serial (P-to-S) block 220, a cyclic prefix addition block 225, and an up-converter (UC) 230. The reception path 250 includes a down-converter (DC) 255, a cyclic prefix removal block 260, a Serial-to-Parallel (S-to-P) block 265, a size N Fast Fourier Transform (FFT) block 270, a Parallel-to-Serial (P-to-S) block 275, and a channel decoding and demodulation block 280.

In the transmission path 200, the channel coding and modulation block 205 receives a set of information bits, applies coding (such as Low Density Parity Check (LDPC) coding), and modulates the input bits (such as using Quadrature Phase Shift Keying (QPSK) or Quadrature Amplitude Modulation (QAM)) to generate a sequence of frequency-domain modulated symbols. The Serial-to-Parallel (S-to-P) block 210 converts (such as demultiplexes) serial modulated symbols into parallel data to generate N parallel symbol streams, where N is a size of the IFFT/FFT used in gNB 102 and UE 116. The size N IFFT block 215 performs IFFT operations on the N parallel symbol streams to generate a time-domain output signal. The Parallel-to-Serial block 220 converts (such as multiplexes) parallel time-domain output symbols from the Size N IFFT block 215 to generate a serial time-domain signal. The cyclic prefix addition block 225 inserts a cyclic prefix into the time-domain signal. The up-converter 230 modulates (such as up-converts) the output of the cyclic prefix addition block 225 to an RF frequency for transmission via a wireless channel. The signal can also be filtered at a baseband before switching to the RF frequency.

The RF signal transmitted from gNB 102 arrives at UE 116 after passing through the wireless channel, and operations in reverse to those at gNB 102 are performed at UE 116. The down-converter 255 down-converts the received signal to a baseband frequency, and the cyclic prefix removal block 260 removes the cyclic prefix to generate a serial time-domain baseband signal. The Serial-to-Parallel block 265 converts the time-domain baseband signal into a parallel time-domain signal. The Size N FFT block 270 performs an FFT algorithm to generate N parallel frequency-domain signals. The Parallel-to-Serial block 275 converts the parallel frequency-domain signal into a sequence of modulated data symbols. The channel decoding and demodulation block 280 demodulates and decodes the modulated symbols to recover the original input data stream.

Each of gNBs 101-103 may implement a transmission path 200 similar to that for transmitting to UEs 111-116 in the downlink, and may implement a reception path 250 similar to that for receiving from UEs 111-116 in the uplink. Similarly, each of UEs 111-116 may implement a transmission path 200 for transmitting to gNBs 101-103 in the uplink, and may implement a reception path 250 for receiving from gNBs 101-103 in the downlink.

Each of the components in FIGs. 2a and 2b can be implemented using only hardware, or using a combination of hardware and software/firmware. As a specific example, at least some of the components in FIGs. 2a and 2b may be implemented in software, while other components may be implemented in configurable hardware or a combination of software and configurable hardware. For example, the FFT block 270 and IFFT block 215 may be implemented as configurable software algorithms, in which the value of the size N may be modified according to the implementation.

Furthermore, although described as using FFT and IFFT, this is only illustrative and should not be interpreted as limiting the scope of the present disclosure. Other types of transforms can be used, such as Discrete Fourier transform (DFT) and Inverse Discrete Fourier Transform (IDFT) functions. It should be understood that for DFT and IDFT functions, the value of variable N may be any integer (such as 1, 2, 3, 4, etc.), while for FFT and IFFT functions, the value of variable N may be any integer which is a power of 2 (such as 1, 2, 4, 8, 16, etc.).

Although FIGs. 2a and 2b illustrate examples of wireless transmission and reception paths, various changes may be made to FIGs. 2a and 2b. For example, various components in FIGs. 2a and 2b can be combined, further subdivided or omitted, and additional components can be added according to specific requirements. Furthermore, FIGs. 2a and 2b are intended to illustrate examples of types of transmission and reception paths that can be used in a wireless network. Any other suitable architecture can be used to support wireless communication in a wireless network.

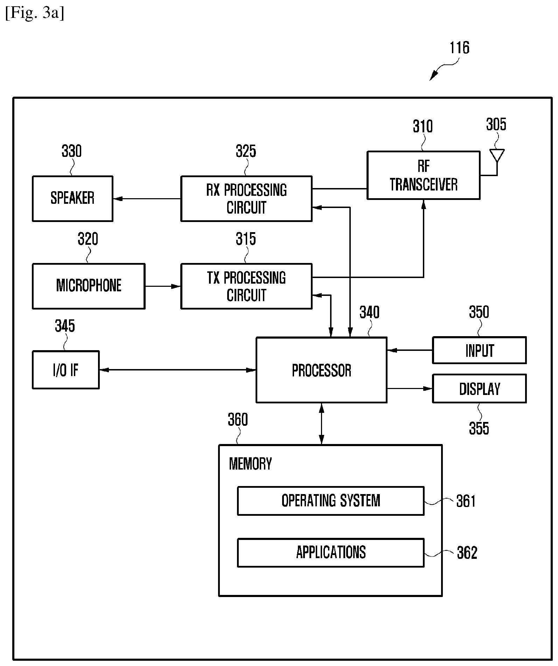

FIG. 3a illustrates an example UE 116 according to the present disclosure. The embodiment of UE 116 shown in FIG. 3a is for illustration only, and UEs 111-115 of FIG. 1 can have the same or similar configuration. However, a UE has various configurations, and FIG. 3a does not limit the scope of the present disclosure to any specific implementation of the UE.

UE 116 includes an antenna 305, a radio frequency (RF) transceiver 310, a transmission (TX) processing circuit 315, a microphone 320, and a reception (RX) processing circuit 325. UE 116 also includes a speaker 330, a processor/controller 340, an input/output (I/O) interface 345, an input device(s) 350, a display 355, and a memory 360. The memory 360 includes an operating system (OS) 361 and one or more applications 362.

The RF transceiver 310 receives an incoming RF signal transmitted by a gNB of the wireless network 100 from the antenna 305. The RF transceiver 310 down-converts the incoming RF signal to generate an intermediate frequency (IF) or baseband signal. The IF or baseband signal is transmitted to the RX processing circuit 325, where the RX processing circuit 325 generates a processed baseband signal by filtering, decoding and/or digitizing the baseband or IF signal. The RX processing circuit 325 transmits the processed baseband signal to speaker 330 (such as for voice data) or to processor/controller 340 for further processing (such as for web browsing data).

The TX processing circuit 315 receives analog or digital voice data from microphone 320 or other outgoing baseband data (such as network data, email or interactive video game data) from processor/controller 340. The TX processing circuit 315 encodes, multiplexes, and/or digitizes the outgoing baseband data to generate a processed baseband or IF signal. The RF transceiver 310 receives the outgoing processed baseband or IF signal from the TX processing circuit 315 and up-converts the baseband or IF signal into an RF signal transmitted via the antenna 305.

The processor/controller 340 can include one or more processors or other processing devices and execute an OS 361 stored in the memory 360 in order to control the overall operation of UE 116. For example, the processor/controller 340 can control the reception of forward channel signals and the transmission of backward channel signals through the RF transceiver 310, the RX processing circuit 325 and the TX processing circuit 315 according to well-known principles. In some embodiments, the processor/controller 340 includes at least one microprocessor or microcontroller.

The processor/controller 340 is also capable of executing other processes and programs residing in the memory 360, such as operations for channel quality measurement and reporting for systems with 2D antenna arrays as described in embodiments of the present disclosure. The processor/controller 340 can move data into or out of the memory 360 as required by an execution process. In some embodiments, the processor/controller 340 is configured to execute the present application 362 based on the OS 361 or in response to signals received from the gNB or the operator. The processor/controller 340 is also coupled to an I/O interface 345, where the I/O interface 345 provides UE 116 with the ability to connect to other devices such as laptop computers and handheld computers. I/O interface 345 is a communication path between these accessories and the processor/controller 340.

The processor/controller 340 is also coupled to the input device(s) 350 and the display 355. An operator of UE 116 can input data into UE 116 using the input device(s) 350. The display 355 may be a liquid crystal display or other display capable of presenting text and/or at least limited graphics (such as from a website). The memory 360 is coupled to the processor/controller 340. A part of the memory 360 can include a random access memory (RAM), while another part of the memory 360 can include a flash memory or other read-only memory (ROM).

Although FIG. 3a illustrates an example of UE 116, various changes can be made to FIG. 3a. For example, various components in FIG. 3a can be combined, further subdivided or omitted, and additional components can be added according to specific requirements. As a specific example, the processor/controller 340 can be divided into a plurality of processors, such as one or more central processing units (CPUs) and one or more graphics processing units (GPUs). Furthermore, although FIG. 3a illustrates that the UE 116 is configured as a mobile phone or a smart phone, UEs can be configured to operate as other types of mobile or fixed devices.

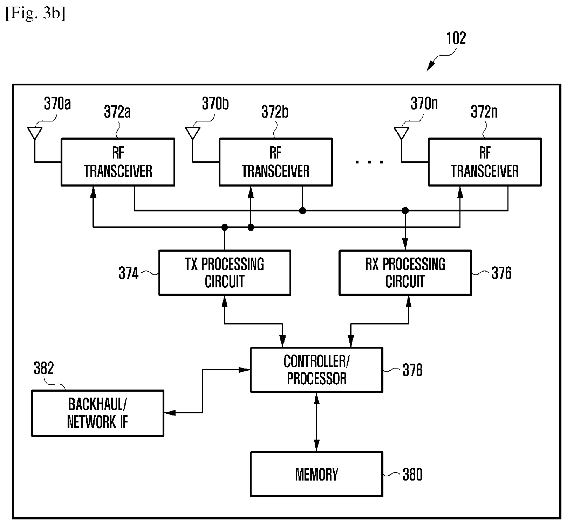

FIG. 3b illustrates an example gNB 102 according to the present disclosure. The embodiment of gNB 102 shown in FIG. 3b is for illustration only, and other gNBs of FIG. 1 can have the same or similar configuration. However, a gNB has various configurations, and FIG. 3b does not limit the scope of the present disclosure to any specific implementation of a gNB. It should be noted that gNB 101 and gNB 103 can include the same or similar structures as gNB 102.

As shown in FIG. 3b, gNB 102 includes a plurality of antennas 370a-370n, a plurality of RF transceivers 372a-372n, a transmission (TX) processing circuit 374, and a reception (RX) processing circuit 376. In certain embodiments, one or more of the plurality of antennas 370a-370n include a 2D antenna array. gNB 102 also includes a controller/processor 378, a memory 380, and a backhaul or network interface 382.

RF transceivers 372a-372n receive an incoming RF signal from antennas 370a-370n, such as a signal transmitted by UEs or other gNBs. RF transceivers 372a-372n down-convert the incoming RF signal to generate an IF or baseband signal. The IF or baseband signal is transmitted to the RX processing circuit 376, where the RX processing circuit 376 generates a processed baseband signal by filtering, decoding and/or digitizing the baseband or IF signal. RX processing circuit 376 transmits the processed baseband signal to controller/processor 378 for further processing.

The TX processing circuit 374 receives analog or digital data (such as voice data, network data, email or interactive video game data) from the controller/processor 378. TX processing circuit 374 encodes, multiplexes and/or digitizes outgoing baseband data to generate a processed baseband or IF signal. RF transceivers 372a-372n receive the outgoing processed baseband or IF signal from TX processing circuit 374 and up-convert the baseband or IF signal into an RF signal transmitted via antennas 370a-370n.

The controller/processor 378 can include one or more processors or other processing devices that control the overall operation of gNB 102. For example, the controller/processor 378 can control the reception of forward channel signals and the transmission of backward channel signals through the RF transceivers 372a-372n, the RX processing circuit 376 and the TX processing circuit 374 according to well-known principles. The controller/processor 378 can also support additional functions, such as higher-level wireless communication functions. For example, the controller/processor 378 can perform a Blind Interference Sensing (BIS) process such as that performed through a BIS algorithm, and decode a received signal from which an interference signal is subtracted. A controller/processor 378 may support any of a variety of other functions in gNB 102. In some embodiments, the controller/processor 378 includes at least one microprocessor or microcontroller.

The controller/processor 378 is also capable of executing programs and other processes residing in the memory 380, such as a basic OS. The controller/processor 378 can also support channel quality measurement and reporting for systems with 2D antenna arrays as described in embodiments of the present disclosure. In some embodiments, the controller/processor 378 supports communication between entities such as web RTCs. The controller/processor 378 can move data into or out of the memory 380 as required by an execution process.

The controller/processor 378 is also coupled to the backhaul or network interface 382. The backhaul or network interface 382 allows gNB 102 to communicate with other devices or systems through a backhaul connection or through a network. The backhaul or network interface 382 can support communication over any suitable wired or wireless connection(s). For example, when gNB 102 is implemented as a part of a cellular communication system, such as a cellular communication system supporting 5G or new radio access technology or NR, LTE or LTE-A, the backhaul or network interface 382 can allow gNB 102 to communicate with other gNBs through wired or wireless backhaul connections. When gNB 102 is implemented as an access point, the backhaul or network interface 382 can allow gNB 102 to communicate with a larger network, such as the Internet, through a wired or wireless local area network or through a wired or wireless connection. The backhaul or network interface 382 includes any suitable structure that supports communication through a wired or wireless connection, such as an Ethernet or an RF transceiver.

The memory 380 is coupled to the controller/processor 378. A part of the memory 380 can include an RAM, while another part of the memory 380 can include a flash memory or other ROMs. In certain embodiments, a plurality of instructions, such as the BIS algorithm, are stored in the memory. The plurality of instructions are configured to cause the controller/processor 378 to execute the BIS process and decode the received signal after subtracting at least one interference signal determined by the BIS algorithm.

As will be described in more detail below, the transmission and reception paths of gNB 102 (implemented using RF transceivers 372a-372n, TX processing circuit 374 and/or RX processing circuit 376) support aggregated communication with FDD cells and TDD cells.

Although FIG. 3b illustrates an example of gNB 102, various changes may be made to FIG. 3b. For example, gNB 102 can include any number of each component shown in FIG. 3a. As a specific example, the access point can include many backhaul or network interfaces 382, and the controller/processor 378 can support routing functions to route data between different network addresses. As another specific example, although shown as including a single instance of the TX processing circuit 374 and a single instance of the RX processing circuit 376, gNB 102 can include multiple instances of each (such as one for each RF transceiver).

Exemplary embodiments of the present disclosure are further described below with reference to the accompanying drawings.

Text and drawings are provided as examples only to help the reader understand the present disclosure. They are not intended and should not be interpreted as limiting the scope of this disclosure in any way. Although certain embodiments and examples have been provided, based on the present disclosure herein, it will be obvious to those skilled in the art that changes may be made to the illustrated embodiments and examples without departing from the scope of the present disclosure.

In existing systems, such as LTE, NR, etc., in order to avoid self-interference caused by transmission to reception of a same communication node, it is usually ensured that there is a sufficient frequency-domain guard interval between an uplink frequency band and a downlink frequency band, or that different uplink and downlink configurations on adjacent bandwidths are avoided. An instance of the former is frequency division duplex. For example, in the NR system, an interval between the uplink frequency band and the downlink frequency band may be up to about 20MHz, so that it can be ensured that reception performance will not be degraded due to the self-interference leaked from the adjacent band when a base station and a terminal simultaneously perform uplink and downlink transmissions. An instance of the latter is that the uplink and downlink configurations of different bandwidth parts within the system bandwidth or the uplink and downlink configurations of multiple carriers of an in-band carrier aggregation in the NR system (an frequency-domain interval between the bandwidth parts or between the multiple carriers of the carrier aggregation is small) need to be consistent, so as to avoid self-interference between adjacent bandwidth parts or carriers.

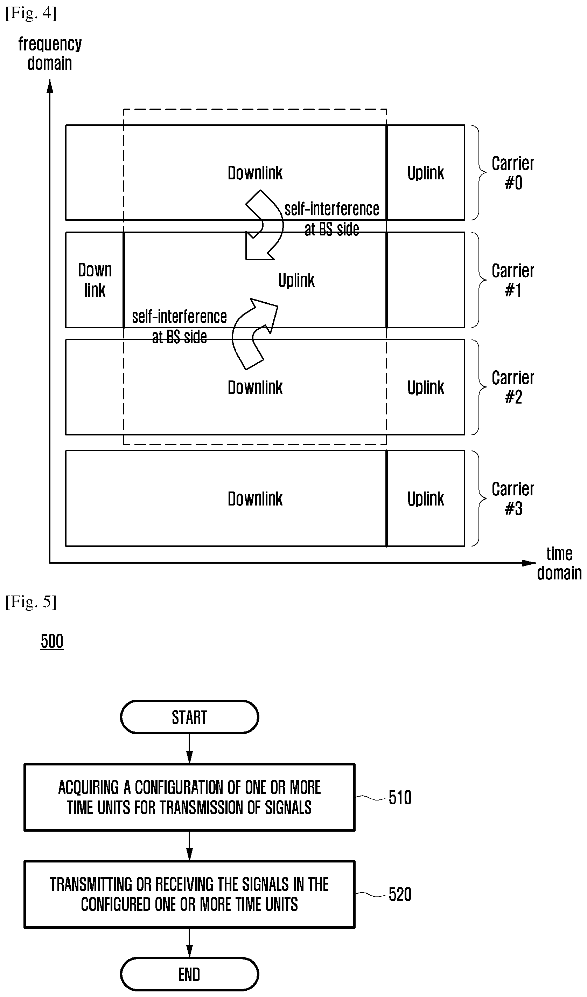

However, if the uplink and downlink configurations of multiple bandwidth parts within the system bandwidth or multiple carriers of the carrier aggregation are required to be consistent, users with different uplink traffic-to-downlink traffic proportions cannot be satisfied at the same time. In actual systems, in order to ensure downlink coverage, the allocation proportion of downlink physical resources is generally higher than that of uplink physical resources. Therefore, for users with uplink traffic, there may be problems such as limited uplink coverage, etc. If the base station has an ability of self-interference cancellation, different uplink and downlink configurations can be configured for different bandwidth parts or different carriers to meet traffic requirements of different users. Taking the carrier aggregation scenario as an example, when the base station has the ability of self-interference cancellation, carriers mainly for uplink resources and carriers mainly for downlink resources may be configured respectively. As shown in FIG. 4, among the four carriers of the carrier aggregation, Carrier #1 is a carrier mainly for uplink resources, and the others are carriers mainly for downlink resources. Further, two adjacent carriers of the carrier mainly for uplink resources (Carrier #1) are the carriers mainly for downlink resources (Carrier #0 and Carrier #2). At this time, at least the downlink transmission on the base station side on the adjacent carriers of Carrier #1 will cause interference to the uplink reception on the base station side on Carrier #1. In order to ensure the uplink reception performance on Carrier #1, the base station side is required to have the ability of self-interference cancellation. Similarly, once it is supported that different bandwidth parts within the configured system bandwidth have different uplink and downlink configurations, and that even different physical resource blocks in the same bandwidth part have different uplink and downlink configurations, it is at least required that the base station should have the ability of self-interference cancellation. Furthermore, if the terminal is required to support transmission on bandwidth parts/carriers/physical resource blocks with different uplink and downlink configurations at the same time, the terminal also needs to have the ability of self-interference cancellation.

Communication nodes, such as base stations, terminals and Integrated Access and Backhaul (IAB) nodes, are required to have the ability of self-interference cancellation. Generally, communication nodes are required to have at least an ability of digital domain cancellation. Although the strength of a self-interference signal when reaching the receiving end can be reduced to a certain extent by designing circuits of transmitting and receiving antennas to physically isolate and cancel receiving and transmitting signals (referred to as antenna cancellation), and/or canceling the self-interference signal in an analog domain of the receiving link (i.e., before analog-to-digital conversion) (referred to as analog cancellation), the ability of self-interference cancellation achieved by these two ways is limited, and residual self-interference signals need to be further processed in a digital domain.

A specific process for digital domain cancellation of a communication node is that the communication node estimates a self-interference channel according to a known first transmission signal transmitted by the communication node, and reconstructs a self-interference signal according to a known second transmission signal transmitted by the communication node and the estimated self-interference channel, and deletes the reconstructed self-interference signal from a received signal, where the first transmission signal may be a reference signal for self-interference channel estimation or a data symbol for self-interference channel estimation; and the second transmission signal is a signal that causes self-interference to a desired reception signal. When the communication node performing digital domain cancellation is a base station, both the first transmission signal and the second transmission signal are downlink signals; when the communication node performing digital domain cancellation is a terminal, both the first transmission signal and the second transmission signal are uplink signals; and when the communication node performing digital domain cancellation is an Integrated Access and Backhaul (IAB) node, the first transmission signal and the second transmission signal are both uplink signals or both downlink signals.

It can be seen from the above process that the key to the performance of digital domain cancellation lies in the accuracy of self-interference channel estimation. It is worth noting that in scenarios considered by the present invention, uplink transmission and downlink transmission are simultaneously performed on adjacent bandwidths, which means that the self-interference channel to be estimated is an out-of-band channel, which is generated by a nonlinear component of the first transmission signal. However, the nonlinear component is generally composed of several high-order components of the first transmission signal, and such nonlinear transformations result in that in-band sequence characteristics of the first transmission signal are not applicable to out-of-band. For example, demodulation reference signals of multiple antenna ports can utilize orthogonal spreading codes in time-domain and/or frequency-domain in-band, so that demodulation reference signals of multiple antenna ports can be orthogonally multiplexed on the same physical resource elements, that is, the in-band sequences of demodulation reference signals of different antenna ports are orthogonal. Orthogonality of reference signal sequences of different antenna ports is helpful to improve the accuracy of multi-antenna port channel estimation, but unfortunately, out-of-band demodulation reference signals cannot maintain orthogonality of sequences of multiple antenna ports, thus would lead to performance degradation in out-of-band multi-antenna port self-interference channel estimation.

The present invention provides a signal transmission method, where the signal includes a physical signal and/or a physical channel. The signal may be a signal supporting multi-port configuration. The meaning of the signal includes, but is not limited to, a dedicated signal for self-interference cancellation; a signal that is for the purpose of self-interference cancellation, such as the demodulation reference signal, including a demodulation reference signal of an uplink/downlink shared channel, a demodulation reference signal of an uplink/downlink control channel, a demodulation reference signal of a broadcast channel, etc.; a sounding reference signal (SRS); a channel state information reference signal (CSI-RS), etc. By making the signals of different antenna ports for the signal (a physical signal and/or a physical channel) orthogonal to each other in time-domain, it can be ensured that the communication node can respectively estimate the self-interference channels of different antenna ports by using signals of multiple ports orthogonal in time-domain, thus avoiding the mutual interference of multi-antenna port channel estimation, and improving the accuracy of self-interference channel estimation.

FIG. 5 illustrates a method 500 performed by a terminal in a wireless communication system. At step 510, a terminal may acquire a configuration of one or more time units for transmission of signals of multiple ports. At step 520, the terminal may transmit/receive the signals of multiple ports in the configured one or more time units. The one or more time units may be configured in three modes (Mode 1, Mode 2 and Mode 3). The following Methods 1, 2 and 3 are not only applicable to a terminal, but also to other communication nodes such as a base station and an IAB node. The time unit may be a slot, a time-domain symbol, etc., but is not limited thereto. The time-domain symbol may be an orthogonal frequency division multiplexing (OFDM) symbol, but is not limited thereto.

Mode 1:

The communication node may transmit/receive signals of one antenna port in the same time unit, as shown in Table 1 and Table 2 below. Specifically, the communication node may transmit/receive signals of different antenna ports in different time units, and the communication node transmits/receives signals of only one antenna port in one time unit, as shown in Table 1. For example, in this case, the number of the configured one or more time units is equal to the number of antenna ports for the signal. Taking the terminal as an example of the communication node, the terminal may acquire a configuration of one or more time units, and the terminal transmits uplink signals of different antenna ports or repetitions of an uplink signal of the same antenna port, and/or receives downlink signals of different antenna ports or repetitions of a downlink signal of the same antenna port, on any two time units within the configured one or more time units.

Alternatively, the communication node may transmit/receive signals of the same/different antenna ports in different time units, and the communication node transmits/receives signals of only one antenna port in one time unit, that is, the communication node may transmit/receive repetitions of signals of the same antenna port in different time units, as shown in Table 2. In this case, the number of time units included in the configured one or more time units may be larger than the number of antenna ports for the signal. The afore-mentioned signal of one antenna port may be one or more kinds of uplink/downlink signals. For example, the signal of Port p in Table 1 may be a DMRS of Port p and a PUSCH of Port p. In addition, the afore-mentioned signal of one antenna port may be either an uplink signal or a downlink signal. Preferably, the time unit may be a time-domain symbol.

[Table 1]

Table 1: Time Unit Configuration.

| Time unit 1 | Time unit 2 | Time unit 3 |
|---|---|---|
| signal of Port p | signal of Port q | signal of Port m |

[Table 2]

| Time unit 1 | Time unit 2 | Time unit 3 |
|---|---|---|
| signal of Port p | signal of Port q | signal of Port p |

Table 2: Time Unit Configuration.

Mode 2

The communication node may transmit/receive signals of two antenna ports in the same time unit, and subcarriers used for transmitting signals of different antenna ports included in the signals of the two antenna ports are spaced from each other by an odd number of subcarriers, as shown in Tables 3, 4 and 5 below. In this way, it can be ensured that signals of different ports are not multiplexed and transmitted on the same physical resource elements, and even if the time resources for transmitting signals of two different ports belong to the same time unit, they are still orthogonal in time-domain. For example, taking Time unit 1 in Tables 3, 4 and 5 as an example, the two antenna ports are respectively Port p and Port q, and the signals of Port p and Port q are transmitted on a physical resource block, so the signal of Port p may be transmitted on the 1st, 3rd, 5th, 7th, 9th and 11th subcarriers in the physical resource block, while the signal of Port q may be transmitted on the 2nd, 4th, 6th, 8th, 10th and 12th subcarriers in the physical resource block. It can be seen that any subcarrier for transmitting the signal of Port p is spaced from any subcarrier for transmitting the signal of Port q by 1, 3, 5, 7, 9 or 11 subcarriers. Therefore, although the time-domain resources for transmitting the signals of Port p and Port q belong to the same time unit, they are still orthogonal in time-domain. This design can ensure that the communication node performing self-interference cancellation may estimate the self-interference channels of different antenna ports in one or more time units, and the communication node may estimate the self-interference channels of different antenna ports in different time units within the one or more time units according to the signals of different antenna ports (transmitted by the communication node) respectively, thus ensuring the accuracy of multi-port self-interference channel estimation. In the foregoing, the first-12th continuous subcarriers are exemplified. However, the subcarriers for transmitting signals may be continuous or discontinuous, but it must be satisfied that the subcarriers for transmitting signals of different antenna ports in the same time unit are spaced from each other by an odd number of subcarriers.

As shown in Table 3, the communication node may transmit/receive signals of completely different ports in different time units. Additionally or alternatively, as shown in Table 4, the communication node may transmit/receive signals of completely different/completely identical ports in different time units. Additionally or alternatively, as shown in Table 4, the communication node may transmit/receive signals of completely different/completely identical/partially identical ports in different time units.

[Table 3]

Table 3: Time Unit Configuration.

| Time unit 1 | Time unit 2 | Time unit 3 | Time unit 4 |
|---|---|---|---|
| signal of Port p<br>signal of Port q | signal of Port m<br>signal of Port n | signal of Port r<br>signal of Port s | signal of Port x<br>signal of Port y |

[Table 4]

Table 4: Time Unit Configuration.

| Time unit 1 | Time unit 2 | Time unit 3 | Time unit 4 |
|---|---|---|---|
| signal of Port p<br>signal of Port q | signal of Port p<br>signal of Port q | signal of Port m<br>signal of Port n | signal of Port m<br>signal of Port n |

[Table 5]

Table 5: Time Unit Configuration.

| Time unit 1 | Time unit 2 | Time unit 3 | Time unit 4 |
|---|---|---|---|
| signal of Port p<br>signal of Port q | signal of Port q<br>signal of Port r | signal of Port r<br>signal of Port s | signal of Port r<br>signal of Port s |

Mode 3

The communication node may transmit/receive signals by using the above-mentioned Mode 1 and Mode 2 in different time units respectively, as shown in Table 6 below.

[Table 6]

Table 6: Time Unit Configuration.

| Time unit 1 | Time unit 2 | Time unit 3 | Time unit 4 | Time unit 5 | Time unit 5 |
|---|---|---|---|---|---|
| signal of Port p | signal of Port q | signal of Port q | signal of Port r<br>signal of Port s | signal of Port r<br>signal of Port s | signal of Port s<br>signal of Port x |

Under the condition that the transmitting and receiving timings of the communication node are aligned, the above three modes can ensure that the signals of multiple ports transmitted/received by the communication node (e.g., base station, terminal and IAB node) are orthogonal in time-domain, thus improving the accuracy of the out-of-band self-interference channel estimation by the communication node. It should be pointed out that, unlike the base station, the terminal needs to transmit uplink in advance, so the timing alignment between transmitting and receiving of the terminal cannot be ensured. This timing misalignment will lead to inter-symbol interference, which will destroy the time-domain orthogonality (upon reception) of the signals of two different ports transmitted at intervals of an odd number of sub-carriers, thus the accuracy of multi-port self-interference channel estimation cannot be ensured.

As for the base station, when the downlink signals of two antenna ports are multiplexed and transmitted on the same time unit of one or more time units of a certain frequency band (hereinafter referred to as an interfering frequency band), a specific method for estimating the out-of-band self-interference channel on an adjacent frequency band (hereinafter referred to as an interfered frequency band) may be that: the base station transmits the same signal within the bandwidth range of the interfered frequency band in the same manner as the manner of signal transmission within the interfering frequency band. Specifically, a mapping mode between time units and signals of each antenna port in the interfered frequency band is the same as that in the interfering frequency band, and a mapping mode between subcarriers and signals of each antenna port in the interfered frequency band is the same as that in the interfering frequency band. In this way, it can be ensured that the base station transmits downlink signals of a full bandwidth (the interfering bandwidth and the interfered bandwidth constitute the full bandwidth) on all time units of one or more time units, and the downlink signals of two ports multiplexed and transmitted on the same time unit are orthogonal in time-domain. Therefore, the base station may estimate the self-interference channel by antenna port, and since the transmitted downlink signals are of a full bandwidth, an estimation result of self-interference channels including the out-of-band self-interference channel may be obtained by using a conventional time-domain channel estimation method, which has the characteristics of simple algorithm and small pilot overhead. Corresponding to this implementation method on the base station side, corresponding operations on the terminal side may be that: the terminal acquires a configuration of downlink invalid resources/rate matching format in the interfered frequency band, and the configured downlink invalid resources/resources unavailable for downlink rate matching are all physical resources in the interfering frequency band on the time units included in the one or more time units.

In the above description, signals include uplink signals and downlink signals. Specifically, the meaning of an uplink signal includes at least one of the following: a demodulation reference signal (DMRS), a sounding reference signal (SRS), a physical uplink share channel (PUSCH) and a physical uplink control channel (PUCCH); and the meaning of a downlink signal includes at least one of the following: a demodulation reference signal (DMRS), a channel state information reference signal (CSI-RS), a synchronization signal, a physical downlink share channel (PDSCH), and a physical downlink control channel (PDCCH).

For example, when the time unit is a time-domain symbol, the terminal acquires a time unit configuration, and the terminal only transmits one or more kinds of uplink signals of the same antenna port on a same time-domain symbol in the configured one or more time units, and/or the terminal acquires a time unit configuration, and the terminal only receives one or more kinds of downlink signals of the same antenna port on a same time-domain symbols in the configured one or more time units. For example, Taking PUSCH DMRSs of two antenna ports (denoted as Port p and Port q) as an example, the terminal transmits the signal sequence of PUSCH DMRS Port p on time-domain symbol #i and the signal sequence of PUSCH DMRS Port q on time-domain symbol #j, where $i \neq j$; and/or the terminal acquires a time unit configuration, and the terminal receives downlink signals of the two ports on a same time-domain symbol in the configured one or more time units, where the downlink signals of different ports for the downlink signals of the two ports are transmitted on subcarriers spaced by an odd number of subcarriers from each other, and the downlink signal of any port may be of one or more kinds. Preferably, the time-domain symbol configuration acquired by the terminal is a plurality of continuous time-domain symbols, which has an advantage of being compatible with the current design for reference signal resource configuration.

For example, preferably, the downlink signal may be a DMRS and/or a PDSCH, that is, the terminal only receives DMRSs and/or PDSCHs of at most 2 antenna ports in the same time unit within the configured one or more time units, where any antenna port may include the DMRS and/or the PDSCH. And, specifically, the DMRS may be a DMRS for PDSCH. Alternatively, preferably, the downlink signal is a DMRS and/or a PDCCH, that is, the terminal only receives DMRSs and/or PDCCHs of at most 2 antenna ports in the same time unit within the configured one or more time units, where any antenna port may include a DMRS and/or a PDCCH. And, specifically, the DMRS may be a DMRS for PDCCH. And, further, in the above two preferred embodiments, the time unit may be a time-domain symbol.

For example, preferably, the uplink signal may be a DMRS and/or PUSCH, that is, the terminal only transmits DMRSs of the same antenna port in the same time unit within the configured one or more time units, or the terminal only transmits PUSCH signals of the same antenna port in the same time unit within the configured one or more time units, or the terminal only transmits DMRSs and PUSCH signals of the same antenna port in the same time unit within the configured one or more time units. And, specifically, the DMRS may be a DMRS for PUSCH. Alternatively, preferably, the uplink signal is a DMRS and/or a PUCCH, that is, the terminal only transmits DMRSs of the same antenna port in the same time unit within the configured one or more time units, or the terminal only transmits PUCCH signals of the same antenna port in the same time unit within the configured one or more time units or the terminal only transmits DMRSs and PUCCH signals of the same antenna port in the same time unit within the configured one or more time units. And, specifically, the DMRS may be a DMRS for PUCCH. And, further, the time unit may be a time-domain symbol.

The following describes transmission modes of uplink signals and downlink signals by taking PUSCHs of 2 antenna ports and PUSCH DMRSs of 2 antenna ports as examples. Assuming that the two antenna ports are Port p and Port q respectively, the configured one or more time units are time-domain symbol #0 and time-domain symbol #1, and the terminal transmits DMRSs and/or PUSCHs of Port p on time-domain symbol #0 and DMRSs and/or PUSCHs of Port q on time-domain symbol #1. At this time, the terminal can perform self-interference channel estimation of Port p on time-domain symbol #0 and self-interference channel estimation of Port q on time-domain symbol #1, respectively, while on other time-domain symbols other than the configured one or more time units, the terminal may transmit DMRSs and/or PUSCHs that are multiplexed and transmitted on the two ports, and multiplexing and transmitting on the two ports means that DMRSs/PUSCHs of different ports are transmitted on the same time-domain symbols, and even DMRS signals or PUSCH signals of different antenna ports are transmitted on the same physical resource elements.

Further, the communication node may determine a transmission power of an uplink signal of a specific antenna port in the configured one or more time units according to at least one of the following: the number of antenna ports for the uplink signal, and the number of physical resource elements or the proportion of physical resource elements for actually transmitting the uplink signal of the specific antenna port, and/or the communication node may determine a transmission power of a downlink signal of a specific antenna port in the configured one or more time units according to at least one of the following: the number of antenna ports for the downlink signal, the number of physical resource elements or the proportion of physical resource elements for actually transmitting the downlink signal of the specific port in the one or more time units.

It should be noted that the uplink signal/downlink signal of the specific port may be of one or more kinds, for example, a DMRS and/or PUSCH of the same antenna port; or a DMRS and/or PDSCH of the same antenna port. Specifically, the number of physical resource elements or the proportion of physical resource elements for actually transmitting the uplink signal/downlink signal of a specific port may be: the number of physical resource elements on each time-domain symbol in the one or more time units actually occupied by the transmission of the uplink signal of the specific port /downlink signal of the specific port; or the ratio of the number of physical resource elements on each time-domain symbol in the one or more time units actually occupied by the transmission of the uplink signal of the specific port /downlink signal of the specific port to all physical resource elements on the time-domain symbol in the one or more time units. The advantage of this design is that it can ensure that the transmission power of the uplink signal/downlink signal of any antenna port transmitted on the configured one or more time units is the same as that of the uplink signal/downlink signal of this antenna port transmitted on time units other than the configured one or more time units, thus ensuring that both have the same nonlinear characteristics, thus ensuring that the out-of-band self-interference channel estimated on the one or more time units can be used for self-interference cancellation on time units other than the one or more time units.

Specifically, taking a terminal as an example of the communication node, when the uplink signal is a DMRS and/or a PUSCH, one way for the terminal to determine the transmission power of the uplink signal of a specific antenna port on the configured one or more time units may be determining a ratio $\beta$ of Energy Per Resource Element (EPRE) of the PUSCH transmitted on time units other than the one or more time units to EPRE of the PUSCH and/or DMRS of the specific port transmitted on the one or more time units, according to the number of antenna ports for the uplink signal and the proportion of physical resource elements occupied by the actual transmission of the uplink signal of the specific antenna port on the one or more time units. For example, $\beta = 10 \times \lg\left(\sqrt{N_{port}}/\sqrt{\eta}\right)$ dB, where $N_{port}$ indicates the number of antenna ports for the uplink signal, $\eta$ indicates the proportion of physical resource elements occupied by actual transmission of the uplink signal of the specific port transmitted on the one or more time units, and the PUSCH transmitted on time units other than the one or more time units and the PUSCH transmitted on the one or more time units are PUSCHs for the same transmission, and the PUSCH transmitted on time units other than the one or more time units and the DMRS transmitted on the one or more time units are the physical channels and reference signals of PUSCHs for the same transmission.

Specifically, when the downlink signal is a DMRS and/or a PDSCH, one way for the terminal to determine the transmission power of the downlink signal of a specific port received in the configured one or more time units may be determining a ratio $\beta$ of Energy Per Resource Element (EPRE) of the PDSCH transmitted on time units other than the one or more time units to EPRE of the PDSCH and/or DMRS of the specific port transmitted on the one or more time units, according to the number of antenna ports for the downlink signal and the proportion of physical resource elements occupied by the actual transmission of the downlink signal of the specific antenna port on the one or more time units. For example, $\beta = 10 \times \lg\left(\sqrt{N_{port}}/\sqrt{\eta}\right)$ dB, where $N_{port}$ indicates the number of antenna ports for the downlink signal, $\eta$ indicates the proportion of physical resource elements occupied by actual transmission of the downlink signal of the specific port on the one or more time units, and the PDSCH transmitted on time units other than the one or more time units and the PDSCH transmitted on the one or more time units are PDSCHs for the same transmission, and the PDSCH transmitted on time units other than the one or more time units and the DMRS transmitted on the one or more time units are the physical channels and reference signals of PDSCHs for the same transmission.

Further, the communication node may also determine the rate matching and/or resource mapping method for the signals of multiple ports. Taking the terminal as an example of the communication node, the terminal may determine the rate matching and/or resource mapping method for an uplink signal according to the resource allocation and configuration of one or more time units for the uplink signal; and/or, the terminal may determine the rate matching and/or resource mapping method for a downlink signal according to the resource allocation and configuration of one or more time units for the downlink signal. Specifically, according to the resource allocation and the time unit configuration of the one or more time units for the uplink signal (or downlink signal), the terminal may calculate the number of physical resource elements for rate matching of each antenna port as the sum of the number of physical resource elements of time units other than the one or more time units in the resource allocation of the uplink signal (or downlink signal) and the number of physical resource elements used to transmit the signal of this antenna port in the one or more time units, where the uplink signal may be a PUSCH and the downlink signal may be a PDSCH. For example, taking PUSCH as an example, assuming that the number of PUSCH antenna ports is 2, which are denoted as Port p and Port q. Resources allocated for the terminal to obtain the PUSCH are 11 time-domain symbols in a certain slot, with the indexes of #3~#13, in which the one or more time units are configured as time-domain symbols with the indexes of #3 and #4, and the other time-domain symbols are not the one or more time units. Specifically, in the one or more time units, time-domain symbol #3 is only used for transmitting PUSCHs and DMRSs of Port p, and time-domain symbol #4 is only used for transmitting PUSCHs and DMRSs of Port q, then the number of physical resource elements for rate matching of PUSCH of Port p is the sum of the number of physical resource elements of the allocated PUSCH transmission of time-domain symbols #5-#11 of time units other than the one or more time units and the number of physical resource elements of PUSCH transmission of Port p on time-domain symbol #3; and the number of physical resource elements for rate matching of PUSCH of Port q is the sum of the number of physical resource elements of the allocated PUSCH transmission of time-domain symbols #5-#11 of time units other than the one or more time units and the number of physical resource elements of the PUSCH transmission of Port q on time-domain symbol #4.

Further, the communication node may transmit uplink signals or downlink signals of different antenna ports in sequence in time units of the configured one or more time units respectively according to certain rules, for example, the rules may be being based on an order of antenna ports from small to large or from large to small. Specifically, when the one or more time units are configured to transmit uplink signals/downlink signals of only a single antenna port in the same time unit, and the number of time units included in the time unit configuration of one or more time units is equal to the number of antenna ports for uplink signals or downlink signals, the uplink signals or downlink signals of different antenna ports are sequentially transmitted in the time units included in the one or more time units according to the order of antenna port numbers, such as from small to large or from large to small.

Specifically, when the number of time units included in the configuration of one or more time units is greater than the number of antenna ports for uplink signals or downlink signals, firstly, the uplink signals or downlink signals of different antenna ports are sequentially transmitted on the first N time units included in the one or more time units according to the order of antenna port numbers, such as from small to large or from large to small; and then, the uplink signals or downlink signals of the first N'-N antenna ports are sequentially transmitted on the N+1th to N'th time units included in the one or more time units according to the same order of the antenna ports, where N is the number of antenna ports for uplink signals/downlink signals, and N' is the number of time units included in the configuration of one or more time units.

Alternatively, specifically, when the one or more time units are configured to multiplex and transmit downlink signals of two antenna ports in the same time unit, and the number of time units included in the configuration of one or more time units is equal to twice the number of antenna ports, the downlink signals of different antenna ports are sequentially transmitted on time units included in the one or more time units according to the order of antenna port numbers, such as from small to large or from large to small. Alternatively, specifically, when the one or more time units are configured to multiplex and transmit downlink signals of two antenna ports in the same time unit, and the number of time units included in the configuration of one or more time units is more than twice the number of antenna ports, the downlink signals of N antenna ports are sequentially transmitted on the first N/2 time units included in the one or more time units according to the order of antenna port numbers, such as from small to large or from large to small, where the downlink signals of two antenna ports are multiplexed and transmitted on each time unit; and then, the downlink signals of the first $\left(N' - \frac{N}{2}\right)/2$ antenna ports are sequentially transmitted on the N/2+1th to N'th time units included in the one or more time units according to the same order of the antenna ports, where N is the number of antenna ports for uplink signals/downlink signals, and N' is the number of time units included in the configuration of one or more time units.

Further, when the uplink signal or downlink signal transmitted in the configured one or more time units is a demodulation reference signal, a pseudo-random sequence or a low peak-to-average power ratio sequence (e.g., Zedoff-Chu sequence, etc.) may be adopted.

Further, the communication node may configure the one or more time units based on a time unit configuration of the one or more time units. Taking the terminal as an example of the communication node, the terminal may receive higher layer signaling to acquire a time unit configuration of one or more time units, and/or the terminal may receive a downlink control channel to acquire a time unit configuration of one or more time units. The time unit configuration of one or more time units acquired by the terminal may be a time unit configuration for uplink signals or a time unit configuration for downlink signals or a time unit configuration for uplink signals and downlink signals.

Specifically, the content of the time unit configuration of one or more time units may include at least one of the following: a pattern of the one or more time units, an index/enable indication of a specific pattern of the one or more time units, a period of a pattern of the one or more time units, and an effective duration of a pattern of the one or more time units. The meaning of a pattern of the one or more time units is configuration information indicating positions of the one or more time units in a period of time, where specifically the period of time may be one or more slots. Alternatively, the time unit configuration of one or more time units may be indicated by TDD uplink and downlink configuration and/or slot structure configuration. Specifically, the positions of one or more time units may be indicated in TDD uplink and downlink configuration and/or slot structure configuration acquired by the terminal. For example, in the TDD uplink and downlink configuration and/or slot structure acquired by the terminal, slots and/or time-domain symbols may be indicated as the one or more time units.

Additionally or alternatively, the terminal may acquire the time unit configuration of one or more time units by receiving cell-specific higher-level signaling, and/or the terminal may acquire the time unit configuration of one or more time units by receiving user-specific higher-level signaling. For example, the terminal may acquire the time unit configuration of one or more time units by receiving the main information block/system information block, etc. Additionally or alternatively, a configuration of the bandwidth part received by the terminal may include the time unit configuration of one or more time units. Additionally or alternatively, the terminal may acquire the time unit configuration of one or more time

EP 4 289 099 B1



units by receiving a downlink control channel, for example, the terminal may receive a message of a specific pattern of the one or more time units indicated in a downlink control channel (for example, an index of one certain group of the configured multiple groups of patterns of the one or more time units may be indicated through the downlink control channel, and the multiple groups of patterns of the one or more time units may be configured through higher layer signaling); and/or, the terminal may receive a downlink control channel to acquire a slot structure index indication, and the indicated slot structure may contain time-domain symbols of one or more time units.

Further, the terminal may also perform the following step before transmitting uplink signals or receiving downlink signals in the configured one or more time units: the terminal acquires downlink signal transmission modes on the configured one or more time unit, in which the downlink signal transmission modes at least include one of the following: the aforementioned Mode 1 (transmitting signals of the same antenna port in the same time unit) and the aforementioned Mode 2 (transmitting signals of two antenna ports in the same time unit, and the adjacent subcarriers used for transmitting signals of different antenna ports included in the signals of the two antenna ports are spaced from each other by an odd number of subcarriers), and the aforementioned Mode 3 (a combination of Mode 1 and Mode 2).

As mentioned above, when a base station performs downlink transmission in a band (hereinafter referred to as interfering bandwidth), it will cause out-of-band self-interference to its uplink reception in an adjacent band (hereinafter referred to as interfered bandwidth), and the base station needs to transmit a downlink signal for out-of-band self-interference channel estimation, and perform self-interference channel estimation based on the downlink signal in the adjacent band for self-interference elimination. In order to ensure the accuracy of self-interference channel estimation in the adjacent bandwidth, time-domain symbols for the base station to transmit the downlink signal for out-of-band self-interference channel estimation on the interfering bandwidth may be configured as time-domain symbols for dedicated self-interference channel estimation in the interfered bandwidth (for example, the terminal does not perform uplink transmission on these time-domain symbols, that is, the base station does not perform uplink reception from the terminal, but only receives self-interference signals from the interfering bandwidth), while the self-interference caused to the uplink reception of the base station on the other time-domain symbols in the interfered bandwidth needs to be cancelled by self-interference cancellation, to ensure reception performance. Considering that uplink reception of the interfered bandwidth also needs uplink channel estimation based on a reference signal, if the reception of the reference signal for uplink channel estimation is also subject to self-interference and the self-interference cannot be completely cancelled, it may also affect the uplink reception performance, so it is necessary to avoid the overlapping of time-domain symbols of the reference signal (for example, a demodulation reference signal) for uplink channel estimation with downlink time-domain symbols in the interfering bandwidth as much as possible.

In the foregoing, a signal transmission method has been proposed, which, when applied to a base station, can be used for downlink signal transmission in an interfering bandwidth and for out-of-band self-interference channel estimation in an interfered bandwidth based on the downlink signal. The present invention provides a method for transmitting uplink physical signals, which can be used for transmitting uplink signals in the interfered bandwidth of a terminal. Considering a common slot structure configuration, usually the last few symbols of the slot in the interfering bandwidth are mostly configured as uplink symbols. By designing the transmitting method of uplink physical signals to make the terminal to transmit uplink physical signals (for example, demodulation reference signals, sounding signals, etc.) on the last one or more symbols for the uplink physical channel transmission in the interfered bandwidth, when the scheduling at the base station side is reasonable, it is enabled that the base station does not transmit downlink signals on these symbols in the interfering bandwidth, that is, it is enabled that the base station does not receive the self-interference signal from the interfering bandwidth on these symbols in the interfered bandwidth, thereby ensuring that the time-domain symbols for transmitting the uplink physical signal by the terminal which performs uplink transmission in the interfered bandwidth are free from out-of-band self-interference.

The terminal may acquire an indication of a time-domain position for transmitting an uplink physical signal and transmit the uplink physical signal according to the indication of the time-domain position, where the indicated time-domain position for the uplink physical signal is located at the last one or more symbols of the uplink physical channel or located at the last one or more symbols of the slot where the uplink physical signal is located. Specifically, the uplink physical signal includes at least one of the following: a demodulation reference signal of PUSCH, a demodulation reference signal of PUCCH, and a sounding reference signal. And, specifically, the uplink physical signal includes at least one of a PUSCH and a PUCCH.

Specifically, a specific way for the terminal to acquire the indication of the time-domain position for transmitting the uplink physical signal may be that the terminal acquires a time-domain position indication of the demodulation reference signal in the downlink control channel and/or higher layer signaling, for example, the indication information may be enabling information of the time-domain symbols at the end of the uplink physical channel occupied by the demodulation reference signal; and for another example, the indication information may be enabling information of the time-domain symbols at the end of the uplink physical channel occupied by the additional demodulation reference signal (additional DMRS).

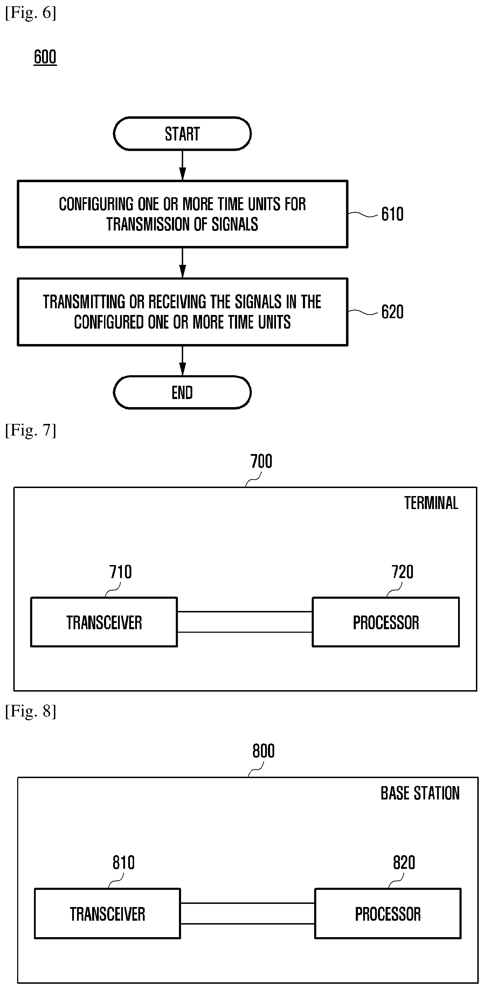

FIG. 6 shows a method 600 performed by a base station in a wireless communication system. At step 610, the base station may configure one or more time units for transmission of signals of multiple ports. At step 520, the base station may transmit/receive the signals of multiple ports in the configured one or more time units. The configuration of the one or more time units has been described in detail above with reference to FIG. 5, and will not be described in detail here. The aforementioned operations performed by the terminal may also be performed by the base station.

FIG. 7 is a block diagram showing a structure of a terminal 700 according to an embodiment of the present disclosure.

Referring to FIG. 7, the terminal 700 includes a transceiver 710 and a processor 720. The transceiver 710 is configured to transmit and receive signals. The processor 720 is configured to control the transceiver to acquire a configuration of one or more time units for transmission of signals of multiple ports; and controlling the transceiver to transmit or receive the signals of multiple ports in the configured one or more time units.

FIG. 8 is a block diagram showing a structure of a base station 800 according to an embodiment of the present disclosure. Referring to FIG. 8, the base station 800 includes a transceiver 810 and a processor 820. The transceiver 810 is configured to transmit and receive signals. The processor 820 is configured to configure one or more time units for transmission of signals of multiple ports; and controlling the transceiver to transmit or receive signals of multiple ports in the configured one or more time units.

Various embodiments of the present disclosure may be implemented as computer-readable codes embodied on a computer-readable recording medium from a specific perspective. The computer-readable recording medium is any data storage device that can store data readable by a computer system. Examples of the computer-readable recording medium may include read-only memory (ROM), random access memory (RAM), compact disk read-only memory (CD-ROM), magnetic tape, floppy disk, optical data storage device, carrier wave (e.g., data transmission via the Internet), and the like. Computer-readable recording media can be distributed by computer systems connected via a network, and thus computer-readable codes may be stored and executed in a distributed manner. Furthermore, functional programs, codes, and code segments for implementing various embodiments of the present disclosure can be easily explained by those skilled in the art to which the embodiments of the present disclosure are applied.

It will be understood that embodiments of the present disclosure may be implemented in hardware, software, or a combination of hardware and software. Software may be stored as program instructions or computer-readable codes executable on a processor on a non-transitory computer-readable medium. Examples of non-transitory computer-readable recording media include magnetic storage media (e.g., ROM, floppy disk, hard disk, etc.) and optical recording media (e.g., CD-ROM, digital video disk (DVD), etc.). The non-transitory computer-readable recording medium may also be distributed on computer systems coupled by a network, so that the computer-readable codes may be stored and executed in a distributed manner. The medium may be read by a computer, stored in a memory, and executed by a processor. The various embodiments may be implemented by a computer or a portable terminal including a controller and a memory, and the memory may be an example of a non-transitory computer-readable recording medium suitable for storing program (s) having instructions to implement the embodiments of the present disclosure. The present disclosure can be realized by a program having codes for specifically implementing the apparatus and method described in the claims, which is stored in a machine (or computer)-readable storage medium. The program may be electronically carried on any medium, such as a communication signal transmitted via a wired or wireless connection, and the present disclosure suitably includes equivalents thereof.

The above description is only specific embodiments of the present disclosure, but the protection scope of the present disclosure is not limited to this. Any person familiar with this art can make various changes or substitutions within the technical scope disclosed in the present disclosure, and these changes or substitutions should be covered within the protection scope of the present disclosure. Therefore, the protection scope of the present disclosure shall be subject to the protection scope of the claims.

## Claims

1. A method (500, 600) performed by a first device supporting uplink transmission and downlink transmission simultaneously performed on adjacent first and second frequency bands in a wireless communication system, the method (500, 600) comprising:

   transmitting, to a second device, a reference signal, RS, used for estimating a self-interference, SI, channel on a resource in a first frequency band, wherein the SI channel is to be estimated for a second frequency band configured for a signal reception from the second device;
   performing estimation for the SI channel based on the RS received by a reception unit of the first device;
   obtaining an SI signal based on a first signal transmitted to the second device in the first frequency band and the estimation for the SI channel; and
   performing self-interference cancellation, SIC, for a second signal received from the second device in the second frequency band, using the SI signal,
wherein different ports of the RS are mapped on different symbols or different subcarriers of one symbol, and
wherein, in case that the different ports of the RS are mapped on the one symbol, the different subcarriers for the different ports are spaced from each other by an odd number in one physical resource block, with the odd number in the one physical resource block being one of 1, 3, 5, 7, 9 and 11.

2. The method (500, 600) of claim 1,

wherein the RS is a demodulation reference signal, DMRS, and
wherein, in case that the first device is a base station (800), the DMRS of a first antenna port is multiplexed with a physical downlink shared channel, PDSCH, in a same symbol, the DMRS of the first antenna port being used for decoding the PDSCH.

3. The method (500, 600) of claim 2, further comprising:

transmitting, to the second device, configuration information on at least one time resource,
wherein the same symbol is identified based on the at least one time resource.

4. The method (500, 600) of claim 3,
wherein a transmission power of the RS is determined based on at least one of a number of antenna port of the RS, a number of physical resource elements on which the DMRS and the PDSCH are transmitted, or a proportion of physical resource elements in the at least one time resource.

5. The method (500, 600) of claim 1,

wherein the RS is a demodulation reference signal, DMRS, and
wherein, in case that the first device is a terminal (700), the DMRS of a first antenna port is multiplexed with a physical uplink shared channel, PUSCH, in a same symbol, the DMRS of the first antenna port being used for decoding the PUSCH.

6. The method (500, 600) of claim 5, further comprising:

receiving, from the second device, information on resource allocation;
identifying that a first symbol in a slot is configured for the first antenna port of the DMRS and a second symbol in the slot is configured for a second antenna port of the DMRS, based on the information; and
determining resource elements for the PUSCH associated with the first antenna port of the DMRS are based on resource elements for the first symbol and resource elements for other symbols in the slot, the other symbols not including the second symbol,
wherein the PUSCH associated with the first antenna port of the DMRS is not mapped to resource elements for the second symbol.

7. A first device (700, 800) supporting uplink transmission and downlink transmission simultaneously performed on adjacent first and second frequency bands in a wireless communication system, the first device comprising:

a transceiver (710, 810); and
a controller (720, 820) configured to:

transmit, via the transceiver (710, 810) to a second device, a reference signal, RS, used for estimating a self-interference, SI, channel on a resource in a first frequency band, wherein the SI channel is to be estimated for a second frequency band configured for a signal reception from the second device,
perform estimation for the SI channel based on the RS received by a reception unit of the first device,
obtain an SI signal based on a first signal transmitted to the second device in the first frequency band and the estimation for the SI channel, and
perform self-interference cancellation, SIC, for a second signal received from the second device in the second frequency band, using the SI signal,
wherein different ports of the RS are mapped on different symbols or different subcarriers of one symbol, and
wherein, in case that the different ports of the RS are mapped on the one symbol, the different subcarriers for the different ports are spaced from each other by an odd number in one physical resource block, with the odd number in the one physical resource block being one of 1, 3, 5, 7, 9 and 11.

8. The first device (700, 800) of claim 7,

wherein the RS is a demodulation reference signal, DMRS, and
wherein, in case that the first device is a base station (800), the DMRS of a first antenna port is multiplexed with a physical downlink shared channel, PDSCH, in a same symbol, the DMRS of the first antenna port being used for decoding the PDSCH.

9. The first device (700, 800) of claim 8,
wherein the controller (720, 820) is further configured to transmit, via the transceiver (710, 810) to the second device, configuration information on at least one time resource, and identify the same symbol based on the at least one time resource.

10. The first device (700, 800) of claim 9,
wherein a transmission power of the RS is determined based on at least one of a number of antenna port of the RS, a number of physical resource elements on which the DMRS and the PDSCH are transmitted, or a proportion of the physical resource elements in the at least one time resource.

11. The first device (700, 800) of claim 7,

wherein the RS is a demodulation reference signal, DMRS, and
wherein, in case that the first device is a terminal (700), the DMRS of a first antenna port is multiplexed with a physical uplink shared channel, PUSCH, in a same symbol, the DMRS of the first antenna port being used for decoding the PUSCH.

12. The first device (700, 800) of claim 11,

wherein the controller (720, 820) is further configured to receive, via the transceiver (710, 810) from the second device, information on resource allocation, identify that a first symbol in a slot is configured for the first antenna port of the DMRS and a second symbol in the slot is configured for a second antenna port of the DMRS, based on the information, and determine resource elements for the PUSCH associated with the first antenna port of the DMRS are based on resource elements for the first symbol and resource elements for other symbols in the slot, the other symbols not including the second symbol, and
wherein the PUSCH associated with the first antenna port of the DMRS is not mapped to resource elements for the second symbol.

**Patentansprüche**

1. Verfahren (500, 600) , das von einer ersten Vorrichtung durchgeführt wird, die Uplink-Übertragung und Downlink-Übertragung unterstützt, die gleichzeitig auf benachbarten ersten und zweiten Frequenzbändern in einem drahtlosen Kommunikationssystem durchgeführt werden, wobei das Verfahren (500, 600) umfasst:

Übertragen eines Referenzsignals, RS, an eine zweite Vorrichtung, das zum Schätzen eines Selbstinterferenz-, SI,-Kanals auf einer Ressource in einem ersten Frequenzband verwendet wird, wobei der SI-Kanal für ein zweites Frequenzband zu schätzen ist, das für einen Signalempfang von der zweiten Vorrichtung konfiguriert ist; Durchführen einer Schätzung für den SI-Kanal basierend auf dem von einer Empfangseinheit der ersten Vorrichtung empfangenen RS; Erhalten eines SI-Signals basierend auf einem ersten Signal, das an die zweite Vorrichtung in dem ersten Frequenzband übertragen wird, und der Schätzung für den SI-Kanal; und Durchführen einer Selbstinterferenzunterdrückung, SIC, für ein zweites Signal, das von der zweiten Vorrichtung im zweiten Frequenzband empfangen wird, unter Verwendung des SI-Signals, wobei verschiedene Anschlüsse des RS verschiedenen Symbolen oder verschiedenen Unterträgern eines Symbols zugeordnet werden, und wobei für den Fall, dass die verschiedenen Anschlüsse des RS dem einen Symbol zugeordnet werden, die verschiedenen Unterträger für die verschiedenen Anschlüsse durch eine ungerade Zahl in einem physikalischen Ressourcenblock voneinander beabstandet sind, wobei die ungerade Zahl in dem einen physikalischen Ressourcenblock eine von 1, 3, 5, 7, 9 und 11 ist.

2.  Verfahren (500, 600) nach Anspruch 1,

wobei das RS ein Demodulationsreferenzsignal, DMRS, ist, und
wobei, für den Fall, dass die erste Vorrichtung eine Basisstation (800) ist, das DMRS eines ersten Antennenanschlusses mit einem gemeinsam genutzten physikalischen Downlink-Kanal, PDSCH, in einem gleichen Symbol gemultiplext wird, wobei das DMRS des ersten Antennenanschlusses zum Decodieren des PDSCH verwendet wird.

3.  Verfahren (500, 600) nach Anspruch 2, ferner umfassend:

Übertragen von Konfigurationsinformationen über mindestens eine Zeitressource an die zweite Vorrichtung, wobei das gleiche Symbol basierend auf der mindestens einen Zeitressource identifiziert wird.

4.  Verfahren (500, 600) nach Anspruch 3,
wobei eine Übertragungsleistung des RS basierend auf zumindest einem von einer Anzahl von Antennenanschlüssen des RS, einer Anzahl von physikalischen Ressourcenelementen, auf denen das DMRS und der PDSCH übertragen werden, oder einem Anteil von physikalischen Ressourcenelementen in der zumindest einen Zeitressource bestimmt wird.

5.  Verfahren (500, 600) nach Anspruch 1,

wobei das RS ein Demodulationsreferenzsignal, DMRS, ist, und
wobei, für den Fall, dass die erste Vorrichtung ein Endgerät (700) ist, das DMRS eines ersten Antennenanschlusses mit einem gemeinsam genutzten physikalischen Uplink-Kanal, PUSCH, in einem gleichen Symbol gemultiplext wird, wobei das DMRS des ersten Antennenanschlusses zum Decodieren des PUSCH verwendet wird.

6.  Verfahren (500, 600) nach Anspruch 5, ferner umfassend:

Empfangen von Informationen über die Ressourcenzuweisung von der zweiten Vorrichtung;
Identifizieren, dass ein erstes Symbol in einem Schlitz für den ersten Antennenanschluss des DMRS konfiguriert ist und ein zweites Symbol in dem Schlitz für einen zweiten Antennenanschluss des DMRS konfiguriert ist, basierend auf den Informationen; und
Bestimmen von Ressourcenelementen für den PUSCH, der dem ersten Antennenanschluss des DMRS zugeordnet ist, basierend auf Ressourcenelementen für das erste Symbol und Ressourcenelementen für andere Symbole in dem Schlitz, wobei die anderen Symbole nicht das zweite Symbol umfassen,
wobei der dem ersten Antennenanschluss des DMRS zugeordnete PUSCH nicht Ressourcenelementen für das zweite Symbol zugeordnet wird.

7.  Erste Vorrichtung (700, 800), die eine Uplink-Übertragung und eine Downlink-Übertragung unterstützt, die gleichzeitig auf benachbarten ersten und zweiten Frequenzbändern in einem drahtlosen Kommunikationssystem durchgeführt werden, wobei die erste Vorrichtung umfasst:

einen Transceiver (710, 810); und
eine Steuerung (720; 820), die konfiguriert ist zum:

Übertragen, an eine zweite Vorrichtung über den Transceiver (710, 810), eines Referenzsignals, RS, das zum Schätzen eines Selbstinterferenz-, SI,-Kanals auf einer Ressource in einem ersten Frequenzband verwendet wird, wobei der SI-Kanal für ein zweites Frequenzband zu schätzen ist, das für einen Signalempfang von der zweiten Vorrichtung konfiguriert ist;
Durchführen einer Schätzung für den SI-Kanal basierend auf dem von einer Empfangseinheit der ersten Vorrichtung empfangenen RS;
Erhalten eines SI-Signals basierend auf einem ersten Signal, das an die zweite Vorrichtung in dem ersten Frequenzband übertragen wird, und der Schätzung für den SI-Kanal, und
Durchführung einer Selbstinterferenzunterdrückung, SIC, für ein zweites Signal, das von der zweiten Vorrichtung im zweiten Frequenzband empfangen wird, unter Verwendung des SI-Signals,

wobei verschiedene Anschlüsse des RS verschiedenen Symbolen oder verschiedenen Unterträgern eines Symbols zugeordnet werden, und

wobei für den Fall, dass die verschiedenen Anschlüsse des RS dem einen Symbol zugeordnet werden, die verschiedenen Unterträger für die verschiedenen Anschlüsse durch eine ungerade Zahl in einem physikalischen Ressourcenblock voneinander beabstandet sind, wobei die ungerade Zahl in dem einen physikalischen Ressourcenblock eine von 1, 3, 5, 7, 9 und 11 ist.

8. Erste Vorrichtung (700, 800) nach Anspruch 7,

wobei das RS ein Demodulationsreferenzsignal, DMRS, ist, und

wobei, für den Fall, dass die erste Vorrichtung eine Basisstation (800) ist, das DMRS eines ersten Antennenanschlusses mit einem gemeinsam genutzten physikalischen Downlink-Kanal, PDSCH, in einem gleichen Symbol gemultiplext wird, wobei das DMRS des ersten Antennenanschlusses zum Decodieren des PDSCH verwendet wird.

9. Erste Vorrichtung (700, 800) nach Anspruch 8,
wobei die Steuerung (720, 820) ferner konfiguriert ist, um über den Transceiver (710, 810) an die zweite Vorrichtung Konfigurationsinformationen über mindestens eine Zeitressource zu übertragen und das gleiche Symbol basierend auf der mindestens einen Zeitressource zu identifizieren.

10. Erste Vorrichtung (700, 800) nach Anspruch 9,
wobei eine Übertragungsleistung des RS basierend auf zumindest einem von einer Anzahl von Antennenanschlüssen des RS, einer Anzahl von physikalischen Ressourcenelementen, auf denen das DMRS und der PDSCH übertragen werden, oder einem Anteil von physikalischen Ressourcenelementen in der zumindest einen Zeitressource bestimmt wird.

11. Erste Vorrichtung (700, 800) nach Anspruch 7,

wobei das RS ein Demodulationsreferenzsignal, DMRS, ist, und

wobei, für den Fall, dass die erste Vorrichtung ein Endgerät (700) ist, das DMRS eines ersten Antennenanschlusses mit einem gemeinsam genutzten physikalischen Uplink-Kanal, PUSCH, in einem gleichen Symbol gemultiplext wird, wobei das DMRS des ersten Antennenanschlusses zum Decodieren des PUSCH verwendet wird.

12. Erste Vorrichtung (700, 800) nach Anspruch 11,

wobei die Steuerung (720, 820) ferner konfiguriert ist, um über den Transceiver (710, 810) von der zweiten Vorrichtung Informationen über die Ressourcenzuweisung zu empfangen, basierend auf den Informationen zu identifizieren, dass ein erstes Symbol in einem Schlitz für den ersten Antennenanschluss des DMRS konfiguriert ist und ein zweites Symbol in dem Schlitz für einen zweiten Antennenanschluss des DMRS konfiguriert ist, und zu bestimmen, dass Ressourcenelemente für den PUSCH, der dem ersten Antennenanschluss des DMRS zugeordnet ist, auf Ressourcenelementen für das erste Symbol und Ressourcenelementen für andere Symbole in dem Schlitz basieren, wobei die anderen Symbole nicht das zweite Symbol umfassen, und wobei der dem ersten Antennenanschluss des DMRS zugeordnete PUSCH nicht Ressourcenelementen für das zweite Symbol zugeordnet ist.

**Revendications**

1. Procédé (500, 600) exécuté par un premier dispositif prenant en charge la transmission de liaison montante et la transmission de liaison descendante effectuées simultanément sur des première et deuxième bandes de fréquences adjacentes dans un système de communication sans fil, le procédé (500, 600) comprenant :

transmettre, à un deuxième dispositif, un signal de référence, RS, utilisé pour estimer un canal d'auto-interférence, SI, sur une ressource dans une première bande de fréquences, dans lequel le canal SI doit être estimé pour une deuxième bande de fréquences configurée pour la réception d'un signal en provenance du deuxième dispositif ;
effectuer une estimation pour le canal SI en se basant sur le RS reçu par une unité de réception du premier dispositif ;

obtenir un signal SI en se basant sur un premier signal transmis au deuxième dispositif dans la première bande de fréquence et l'estimation du canal SI ; et

effectuer une annulation d'auto-interférence, SIC, pour un deuxième signal reçu depuis le deuxième dispositif dans la deuxième bande de fréquences, à l'aide du signal SI,

dans lequel différents ports de la RS sont mappés sur différents symboles ou différentes sous-porteuses d'un symbole, et

dans lequel, dans le cas où les différents ports du RS sont mappés sur le même symbole, les différentes sous-porteuses pour les différents ports sont espacées les unes des autres d'un nombre impair dans un bloc de ressources physiques, le nombre impair dans le bloc de ressources physiques étant l'un de 1, 3, 5, 7, 9 et 11.

2. Procédé (500, 600) de la revendication 1,

dans lequel le RS est un signal de référence de démodulation, DMRS, et

dans lequel, si le premier dispositif est une station de base (800), le DMRS d'un premier port d'antenne est multiplexé avec un canal physique partagé de liaison descendante, PDSCH, dans un même symbole, le DMRS du premier port d'antenne étant utilisé pour décoder le PDSCH.

3. Procédé (500, 600) de la revendication 2, comprenant en outre :

transmettre, au deuxième dispositif, des informations de configuration sur au moins une ressource temporelle, dans lequel le même symbole est identifié sur la base de l'au moins une ressource temporelle.

4. Procédé (500, 600) de la revendication 3,
dans lequel une puissance de transmission du RS est déterminée sur la base d'au moins un d'un nombre de ports d'antenne du RS, d'un nombre d'éléments de ressources physiques sur lesquels le DMRS et le PDSCH sont transmis, ou d'une proportion d'éléments de ressources physiques dans au moins une ressource temporelle.

5. Procédé (500, 600) de la revendication 1,

dans lequel le RS est un signal de référence de démodulation, DMRS, et
dans lequel, si le premier dispositif est un terminal (700), le DMRS d'un premier port d'antenne est multiplexé avec un canal physique partagé de liaison montante, PUSCH, dans un même symbole, le DMRS du premier port d'antenne étant utilisé pour décoder le PUSCH.

6. Procédé (500, 600) de la revendication 5, comprenant en outre :

recevoir, de la part du deuxième dispositif, des informations sur l'allocation de ressources ;
identifier qu'un premier symbole dans un créneau est configuré pour le premier port d'antenne du DMRS et qu'un deuxième symbole dans le créneau est configuré pour un deuxième port d'antenne du DMRS, en se basant sur les informations ; et
déterminer des éléments de ressource pour le PUSCH associé au premier port d'antenne du DMRS sur la base d'éléments de ressource pour le premier symbole et d'éléments de ressource pour d'autres symboles dans le créneau, les autres symboles n'incluant pas le deuxième symbole,
dans lequel le PUSCH associé au premier port d'antenne du DMRS n'est pas mappé à des éléments de ressource pour le deuxième symbole.

7. Premier dispositif (700, 800) prenant en charge une transmission de liaison montante et une transmission de liaison descendante effectuées simultanément sur des première et deuxième bandes de fréquences adjacentes dans un système de communication sans fil, le premier dispositif comprenant :

un émetteur-récepteur (710, 810) ; et
une commande (720, 820) configurée pour :

transmettre, via l'émetteur-récepteur (710, 810) à un deuxième dispositif, un signal de référence, RS, utilisé pour estimer un canal d'auto-interférence, SI, sur une ressource dans une première bande de fréquences, dans lequel le canal SI doit être estimé pour une deuxième bande de fréquences configurée pour la réception d'un signal provenant du deuxième dispositif,

effectuer une estimation pour le canal SI en se basant sur le RS reçu par une unité de réception du premier dispositif,

obtenir un signal SI en se basant sur un premier signal transmis au deuxième dispositif dans la première bande de fréquence et l'estimation du canal SI, et

effectuer une annulation d'auto-interférence, SIC, pour un deuxième signal reçu depuis le deuxième dispositif dans la deuxième bande de fréquences, à l'aide du signal SI,

dans lequel différents ports de la RS sont mappés sur différents symboles ou différentes sous-porteuses d'un symbole, et

dans lequel, dans le cas où les différents ports du RS sont mappés sur le même symbole, les différentes sous-porteuses pour les différents ports sont espacées les unes des autres d'un nombre impair dans un bloc de ressources physiques, le nombre impair dans le bloc de ressources physiques étant l'un de 1, 3, 5, 7, 9 et 11.

8. Premier dispositif (700, 800) de la revendication 7,

   dans lequel le RS est un signal de référence de démodulation, DMRS, et
   dans lequel, si le premier dispositif est une station de base (800), le DMRS d'un premier port d'antenne est multiplexé avec un canal physique partagé de liaison descendante, PDSCH, dans un même symbole, le DMRS du premier port d'antenne étant utilisé pour décoder le PDSCH.

9. Premier dispositif (700, 800) de la revendication 8,
   dans lequel la commande (720, 820) est en outre configurée pour transmettre, via l'émetteur-récepteur (710, 810) au deuxième dispositif, des informations de configuration sur au moins une ressource temporelle, et identifier le même symbole sur la base de l'au moins une ressource temporelle.

10. Premier dispositif (700, 800) de la revendication 9,
    dans lequel une puissance de transmission du RS est déterminée sur la base d'au moins un d'un nombre de ports d'antenne du RS, d'un nombre d'éléments de ressources physiques sur lesquels le DMRS et le PDSCH sont transmis, ou d'une proportion d'éléments de ressources physiques dans au moins une ressource temporelle.

11. Premier dispositif (700, 800) de la revendication 7,

    dans lequel le RS est un signal de référence de démodulation, DMRS, et
    dans lequel, si le premier dispositif est un terminal (700), le DMRS d'un premier port d'antenne est multiplexé avec un canal physique partagé de liaison montante, PUSCH, dans un même symbole, le DMRS du premier port d'antenne étant utilisé pour décoder le PUSCH.

12. Premier dispositif (700, 800) de la revendication 11,

    dans lequel la commande (720, 820) est en outre configurée pour recevoir, via l'émetteur-récepteur (710, 810) du deuxième dispositif, des informations sur l'allocation de ressources, identifier qu'un premier symbole dans un créneau est configuré pour le premier port d'antenne du DMRS et qu'un deuxième symbole dans le créneau est configuré pour un deuxième port d'antenne du DMRS, sur la base des informations, et déterminer les éléments de ressource pour le PUSCH associé au premier port d'antenne du DMRS sur la base d'éléments de ressource pour le premier symbole et d'éléments de ressource pour d'autres symboles dans le créneau, les autres symboles n'incluant pas le deuxième symbole, et

    dans lequel le PUSCH associé au premier port d'antenne du DMRS n'est pas mappé à des éléments de ressource pour le deuxième symbole.

[Fig. 1]

[Fig. 2a]

[Fig. 2b]

[Fig. 3a]

116

330 SPEAKER
325 RX PROCESSING CIRCUIT
310 RF TRANSCEIVER
305
320 MICROPHONE
315 TX PROCESSING CIRCUIT
345 I/O IF
340 PROCESSOR
350 INPUT
DISPLAY
355
360 MEMORY
OPERATING SYSTEM — 361
APPLICATIONS — 362

[Fig. 3b]

[Fig. 4]

frequency
domain

[Fig. 5]

500

START

ACQUIRING A CONFIGURATION OF ONE OR MORE
TIME UNITS FOR TRANSMISSION OF SIGNALS — 510

TRANSMITTING OR RECEIVING THE SIGNALS IN THE
CONFIGURED ONE OR MORE TIME UNITS — 520

END

[Fig. 6]

600

```
                    ┌──────────┐
                    │  START   │
                    └────┬─────┘
                         │
          ┌──────────────▼──────────────────┐
          │  CONFIGURING ONE OR MORE TIME    │      610
          │  UNITS FOR TRANSMISSION OF       │
          │  SIGNALS                         │
          └──────────────┬──────────────────┘
                         │
          ┌──────────────▼──────────────────┐
          │  TRANSMITTING OR RECEIVING THE   │      620
          │  SIGNALS IN THE CONFIGURED ONE   │
          │  OR MORE TIME UNITS              │
          └──────────────┬──────────────────┘
                         │
                    ┌────▼─────┐
                    │   END    │
                    └──────────┘
```

[Fig. 7]

700

TERMINAL

710 TRANSCEIVER — 720 PROCESSOR

[Fig. 8]

800

BASE STATION

810 TRANSCEIVER — 820 PROCESSOR

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017230159 A